# EUROPEAN PATENT SPECIFICATION

(11) **EP 4 310 431 B1**
(45) Date of publication and mention of the grant of the patent: **12.08.2026**
(21) Application number: 22186472.1
(22) Date of filing: 22.07.2022
(51) Int. Cl.: F28F 9/02, H01M 10/625, H01M 10/6556

(54) **THERMAL CONTROL DEVICE, ESPECIALLY FOR COOLING AN ELECTRICAL COMPONENT**
THERMISCHE STEUERUNGSVORRICHTUNG, INSBESONDERE ZUM KÜHLEN EINES ELEKTRISCHEN BAUTEILS
DISPOSITIF DE RÉGULATION THERMIQUE, EN PARTICULIER POUR LE REFROIDISSEMENT D'UN COMPOSANT ÉLECTRIQUE

(43) Date of publication of application: 24.01.2024
(73) Proprietor: Valeo Electrification, 95892 Cergy Pontoise (FR)
(72) Inventor: SUS, Pawel, 96476 Bad Rodach (DE); SIMON, Frederic, 96476 Bad Rodach (DE); VODERA, Vaclav, 267 53 Zebrak (CZ); VYVADIL, Radek, 267 53 Zebrak (CZ); BILEK, Petr, 26753 Zebrak (CZ)
(74) Representative: Valeo Powertrain Systems

(56) References cited:
- CN-U- 215 930 673
- DE-U1- 202019 102 427
- DE-U1- 202020 103 791
- US-A1- 2016 049 705
- US-A1- 2022 003 510
- US-B2- 7 229 103

## Description

### FIELD OF INVENTION

The present invention relates to a heat exchanger, particularly, the present invention relates to a battery cooler for an electric vehicle. Specifically, the invention relates to a battery cooler as defined in the preamble of claim 1, and as illustrated in US 2016/049705.

### BACKGROUND

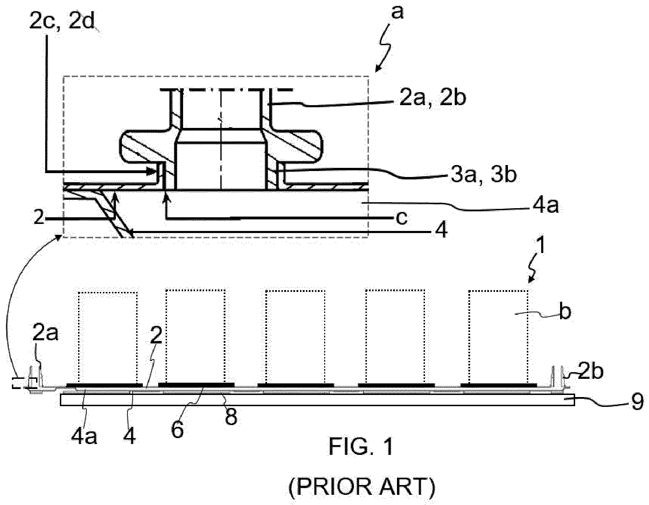

Referring to FIG. 1 of the accompanying drawings, a battery cooler 1 along with a connection system "a" for forming connection between a base plate 2 and corresponding nozzle 2a, 2b is illustrated. The battery cooler 1 generally includes the base plate 2, a channel plate 4, an inlet nozzle 2a and an outlet nozzle 2b. The base plate 2 supports thereon batteries "b" to be cooled on an outer side thereof. The channel plate 4 is disposed abutting the base plate 2 and is formed with channels 4a to define closed fluid flow passages between the base plate 2 and the channel plate 4 for coolant flow when the base plate 2 and the channel plate 4 are assembled together. The assembly of the base plate 2 and the channel plate 4 is mounted on a casing 9 that in turn is mounted on a vehicle frame. The inlet nozzle 2a and the outlet nozzle 2b for ingress and egress of fluid with respect to the fluid flow passages are secured to the base plate 2 by brazing or any other joining process. Referring to the enlarged view of a conventional connection system "a" of securing the nozzles 2a and 2b to the base plate 2 by brazing, the conventional connection system involves forming of collars 2c and 2d on the base plate 2 corresponding to the nozzles 2a and 2b. The collar 2c, 2d receives a flanged sleeve 3a, 3b extending from the respective nozzle 2a, 2b to pre-assemble the nozzle 2a, 2b with respect to the base plate 2 before brazing. The flanges formed on the flanged sleeve 3a, 3b, controls the insertion thereof in the 2c, 2d. The collar 2c and 2d and the respective flanged sleeves 3a and 3b received in the collar 2c and 2d are cladded to form a brazing connection there-between. The battery cooler 1 further includes a thermal pad 6 and elastic pads 8. The thermal pad 6 is/are disposed between the base plate 2 and the batteries b supported on the base plate 2 to improve thermal contact between the batteries b and the base plate 2 to improve thermal efficiency and thereby the battery cooling. The elastic pads 8 disposed between the casing 9 and the channel plate 4 and acts as vibration isolators to prevent the vehicle vibrations from reaching the battery "b" through the casing 9.

As the heat exchange between the batteries "b" disposed on the base plate 2 and the coolant flowing through the flow passages happens through the base plate 2, accordingly, the base plate 2 is required to be of thinner cross section to improve the heat transfer. The base plate 2 with the collar 2c, 2d is formed by stamping of the same metal blank, accordingly, the collar 2c, 2d is prone to be fragile and subjected to stress concentration, particularly, at the corners "c" due to reduced dimensions thereof. As the collars 2c and 2d are formed by the stamping operation, the thickness of the collar 2c and 2d is further reduced. In some cases, the collar 2c, 2d is formed on a narrow portion of the base plate 2 that is extending from the main portion of the base plate 2, as such the extension portion on which the collar 2c, 2d is formed is also prone to be fragile, thereby requiring reinforcement. The mechanical failure, particularly, cracks formed on the connection between the nozzle 2a, 2b and the base plate 2 may cause coolant leakage leading to inefficiency battery cooler 1 and battery failure due to over-heating.

None of the prior art addresses the problem of stress concentration and mechanical failure, particularly, crack formation at the corners of the collars 2c, 2d. More specifically, none of the prior art addresses the problems arising due to the fragile collar 2c, 2d subjected to stress concentration due to thinner sections of the collar 2c, 2d.

Accordingly, there is a need for a battery cooler configured with a robust connection system for forming a secure brazing connection between inlet and outlet nozzles and a base plate of the battery cooler. Further, there is a need for a battery cooler configured with a connection system for forming connection between nozzles and base plate that obviates the problems of stress concentration and fragile structure of the connection faced in conventional connection systems that involves inherently formed thinner collars extending from the base plate for forming the connection. More specifically, there is a need for a battery cooler configured with a connection system that provides a reinforced connection between nozzles and a base plate making the connection secure and reliable.

### OBJECTS

An object of the present invention is to provide a battery cooler configured with a connection system for forming connection between nozzles and base plate that obviates the problems of stress concentration and fragile structure of the connection faced in conventional connection systems that involve inherently formed thinner collars extending from the base plate for forming the connection.

Another object of the present invention is to provide a battery cooler configured with a robust connection system for pre-brazing assembly and forming a secure brazing connection between a base plate and inlet and outlet nozzles of the battery cooler.

Still another object of the present invention is to provide a battery cooler configured with a connection system that provides a reinforced connection between nozzles and a base plate making the connection secure and reliable.

### SUMMARY

A battery cooler is disclosed in accordance with an embodiment of the present invention. The battery cooler includes a base plate and a channel plate. The base plate supports thereon batteries B to be cooled on an outer side thereof. The base plate includes openings formed thereon. The channel plate disposed abutting the base plate. At least one of the base plate and the channel plate is formed with respective channels. Preferentially, the channel plate is formed with channels. The channels define closed fluid flow passages between the base plate and the channel plate for coolant flow. The battery cooler further includes at least one flanged collar separate from the base plate. The flanged collar includes a flange portion and a sleeve portion. The flanged collar forms secure connection between the corresponding nozzle and the base plate.

Also, the battery cooler further includes an inlet nozzle and an outlet nozzle for ingress and egress of fluid with respect to the fluid flow passages, wherein the inlet and outlet nozzles are securely connected to the base plate by brazing joining process.

Generally, the flanged collar is having thickness more than the base plate and preferentially more than the base plate and the nozzle.

Further, an inner side of the nozzle is formed with inwardly protruding stopper to prevent further advance of the sleeve portion into the corresponding nozzle.

Particularly, the flange portion is held between the base plate and the channel plate, the sleeve portion extends from the flange portion, passes through the respective opening and forms connection with the corresponding nozzle.

More specifically, the sleeve portion is received and held inside the corresponding nozzle.

Further, at least one of the abutting faces of the base plate and the channel plate is formed with at least one recess that receives and holds at least a portion of the flange portion therein sandwiched between the base plate and the channel plate.

Generally, the base plate is formed with at least one recess along at least a portion of the periphery of the corresponding opening and on the inner side thereof opposite the channel plate. The recess receives and holds at least a portion of the flange portion therein sandwiched between the base plate and the channel plate.

Preferably, the battery cooler includes separate flanged collars for the inlet and outlet nozzle. The separate flanged collars are formed with separate flange portions and separate sleeve portions extending from the respective flange portions. The separate flange portions are received in separate recesses whereas the separate sleeve portions are received in the corresponding inlet and outlet nozzles.

Alternatively, the battery cooler includes a single flanged collar with a single flange portion and separate sleeve portions extending from the single flange portion. The single flange portion is received in a single recess, whereas the separate sleeve portions are received in the corresponding inlet and outlet nozzles.

Generally, at least one of inner sides of the base plate and channel plate and inner and outer sides of the flange portion sandwiched between the base plate and channel plate is coated with cladding material to form brazing connection between the flange portion and the inner sides of the base plate and the channel plate.

Particularly, the sleeve portion is having an external dimension at at least a portion thereof more than the internal dimension of the corresponding nozzle to configure interference fit between sleeve portion and the corresponding nozzle.

In accordance with an embodiment of the present invention, retainer elements in the form of protrusions secured to at least one of the inner side of the nozzle and outer side of the sleeve enable secure holding of the sleeve portion inside the corresponding nozzle.

Specifically, the retainer elements form the portion of the sleeve portion having an external dimension more than the internal dimension of the corresponding nozzle

Furthermore, the outer dimension of the protrusions is more than the internal dimension of the corresponding nozzle.

Particularly, at least one of inner side of the nozzle and outer side of the sleeve portion is coated with cladding material to form brazing connection between the sleeve portion and the corresponding nozzle.

Also is disclosed a method of assembling a battery cooler. The method includes the steps of assembling at least one flanged collar to a base plate such that a sleeve portion passes through the respective opening formed on the base plate and a flange portion is received in corresponding recess formed on an inner side of the base plate. Subsequently, the method further includes the step of assembling the base plate to the channel plate by means of engagement elements such that at least a portion of the flange portion received in the corresponding recess is sandwiched and held between the base plate and the channel plate. The method further includes the step of assembling at least one nozzle to the corresponding sleeve portion passing through and extending out of the opening formed on the base plate, thereby defining a pre-assembly of different components to be securely connected by a joining process. The method of assembling the battery cooler finally includes the step of subjecting the pre-assembly so formed to the joining process. The irreversible connection is formed between abutting surfaces of at least one flanged collar and at least one of base plate, the channel plate and the corresponding nozzle to form irreversible connection between the nozzle and the base plate.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates a schematic representation of a conventional battery cooler, also is illustrated an enlarged sectional view of a connection system for configuring connection between a nozzle and a base plate using collar extending from the base plate;
FIG. 2 illustrates a pair of battery coolers in accordance with an embodiment of the present invention disposed in spaced apart relation with each other to accommodate batteries to be cooled there-between;
FIG. 3 illustrates an isometric view of one of the battery coolers of FIG. 2;
FIG. 4 illustrates an exploded view of one of the battery coolers of FIG. 2;
FIG. 5 illustrates an enlarged isometric top view of a portion of a base plate of one of the battery coolers of FIG. 2, also is illustrated a recess formed on the base plate, particularly, a recess formed of an extension portion extending from the base plate;
FIG. 6 illustrates an enlarged isometric bottom view of the portion of the base plate illustrated in FIG. 6;
FIG. 7 illustrates an enlarged isometric bottom view of a portion of channel plate of one of the battery coolers of FIG. 2;
FIG. 8 illustrates an enlarged isometric top view of the portion of the channel plate of FIG. 7;
FIG. 9 illustrates isometric view of one of the nozzles connected to the base plate of the battery cooler of FIG. 2;
FIG. 10 illustrates a sectional view of the nozzle of Fig. 9;
FIG. 11 illustrates an isometric view of a flanged collar in accordance with an embodiment of the present invention for forming pre-brazing assembly and forming brazing connection between the base plate and nozzle of the battery cooler of FIG. 2;
FIG. 12 - FIG. 14 illustrates isometric views of the flanged collars in accordance with different elements, wherein the flange collar is formed with retainer elements of different configuration and at different positions;
FIG. 15 illustrates a sectional view of a connection formed between the base plate and the nozzle by the flanged collar of one of the FIG. 11-14;
FIG. 16 illustrates an exploded view of a battery cooler in accordance with another embodiment, wherein the battery cooler is configured with a flanged collar with a single flange and two sleeve portions for forming connection between base plate and multiple nozzles;
FIG. 17 illustrates isometric view of the flanged collar configured in the battery cooler of FIG. 16 and having single flange and two sleeves;
FIG. 18 illustrates a sectional view of a connection formed between the base plate and the nozzles by the flanged collar of FIG. 17; and
FIG. 19 illustrates a flow chart depicting various steps involved in the assembly of the battery cooler.

### DETAILED DESCRIPTION

The present invention is explained with example of battery cooler, wherein the battery cooler is configured with a connection system for forming connection between a base plate and inlet and outlet nozzles. The connection system uses additional component in the form of at least one flanged collar for forming the connection. The flanged collar includes a flange portion and a sleeve portion. The flanged collar forms a pre-brazing assembly between the base plate and the corresponding nozzle and further forms brazing connection between the corresponding nozzle and the base plate. However, the present invention is also applicable for other heat exchangers used in vehicular and non-vehicular applications, wherein it is required to configure robust connection between components, particularly, tubular element and plate of the heat exchanger. Specifically, the present invention is applicable for any heat exchanger where it is required to address the problems of stress concentration and fragile structure of connection between tubular nozzle and plate of thinner section by reinforcing the connection with a reinforcement element, particularly, in cases wherein the thinner section of the plate is unavoidable to achieve improved heat transfer. More specifically, the present invention utilizes a flanged collar separate from a plate of thinner section for forming connection between a tubular nozzle and the plate instead of forming thinner collars extending from the plate of thinner section for forming the connection between the plate and the nozzle. Particularly, the connection system of the present invention is applicable for components used in any applications wherein it is required to form robust connection between components and at least one of the component is required to be of thinner section.

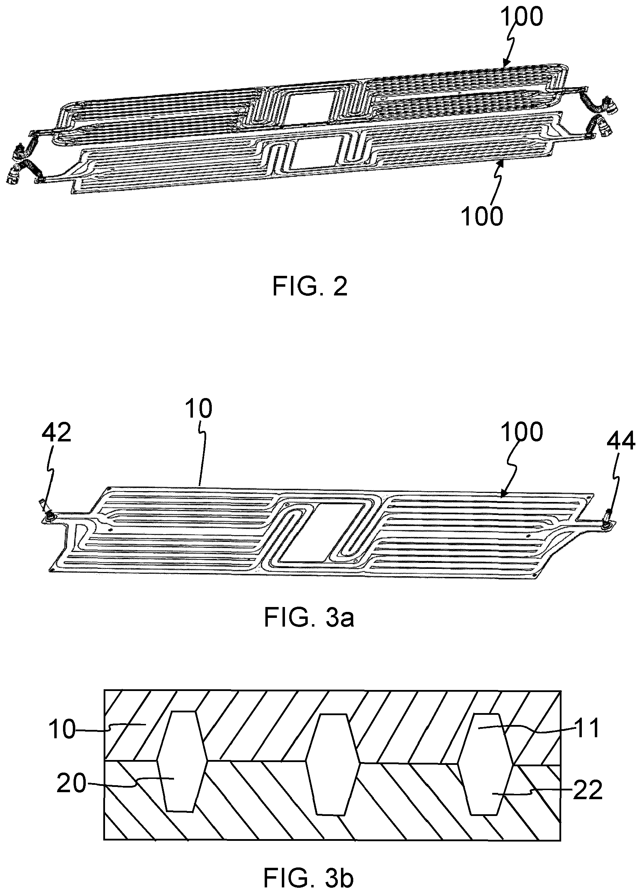

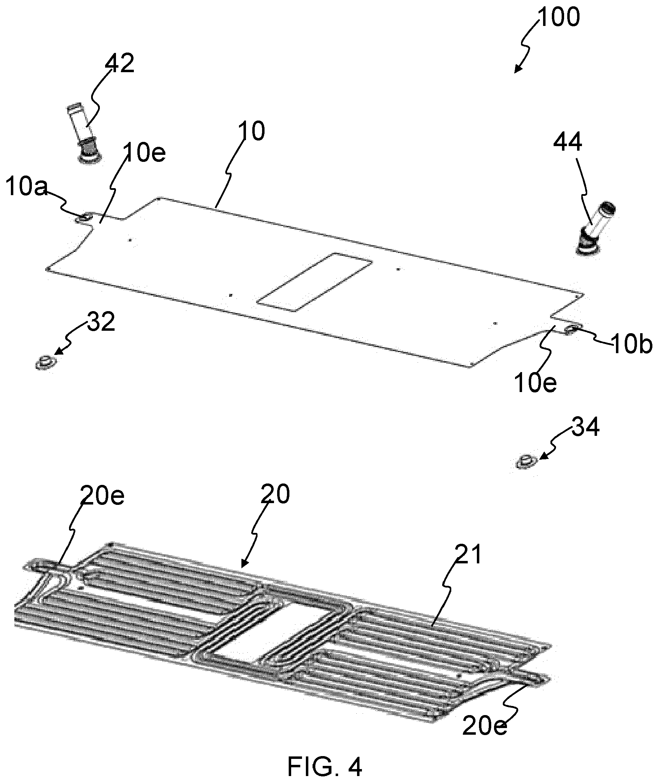

FIG. 2 illustrates a pair of battery coolers 100 in accordance with an embodiment of the present invention disposed in spaced apart relation with each other to accommodate batteries to be cooled there-between. FIG. 3 illustrates an isometric view of a battery cooler 100. FIG. 4 illustrates an exploded view of the battery cooler 100 in accordance with an embodiment of the present invention. Referring to the FIG. 3 and 4, the battery cooler 100 includes a base plate 10, a channel plate 20, at least one flanged collar 32 and 34 corresponding to the inlet nozzle 42 and the outlet nozzle 44 respectively.

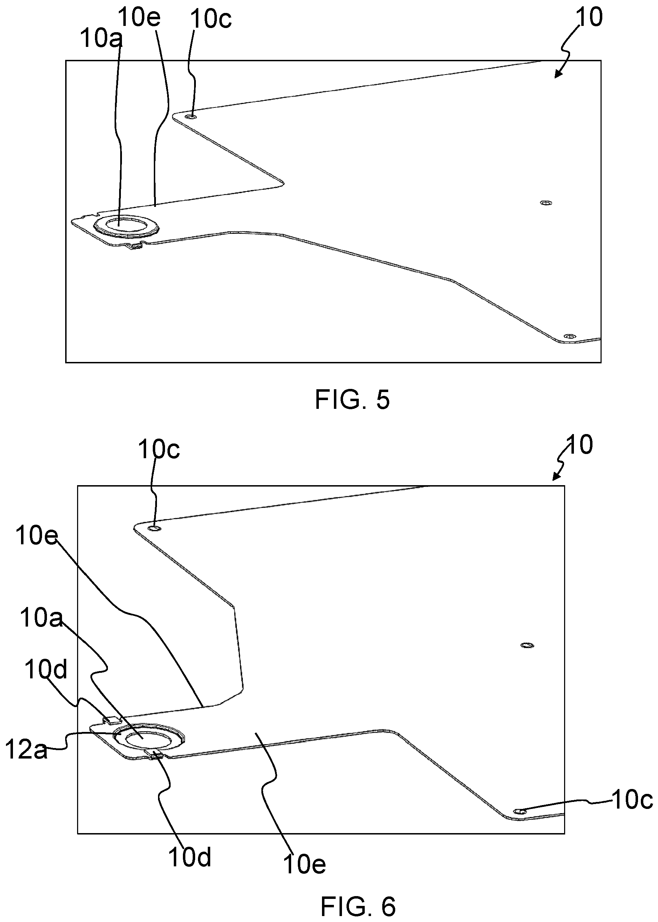

Referring to the FIG. 5 and FIG. 6 of the accompanying drawings, enlarged view of the base plate 10 from opposite sides is illustrated. The base plate 10 supports thereon batteries B to be cooled by the battery cooler 100. Generally, the batteries "B" are disposed on an outer side of the base plate 10. The base plate 10 includes openings 10a and 10b corresponding to the nozzles 42 and 44 connected to the base plate 10. In accordance with an embodiment of the present invention, the inlet and the outlet nozzles 42 and 44 are secured to the base plate 10, particularly, the inlet and outlet nozzles 42 and 44 are secured to the base plate 10 by brazing. The base plate 10 further includes holes 10c and tabs 10d formed thereon. The tabs 10d are crimped to the channel plate 20 for securing the base plate 10 to the channel plate 20, particularly for forming a pre-brazing assembly between the base plate 10 and the channel plate 20. The pre-brazing assembly between the base plate 10 and the channel plate 20 is subjected to brazing to form secure connection between the base plate 10 and the channel plate 20. Although, in the forthcoming description, the connection between the components of the battery cooler 100 of the present invention, is explained with example of brazing. However, the connection between various components of the battery cooler of the present invention is not limited to brazing connection and the components of the battery cooler can also be connected by other joining means such as for example, laser welding.

The batteries "B" are stacked in a spaced apart configuration with respect to each other on the base plate 10. Accordingly, the longitudinal dimension of the base plate 10 is at least 1.5 times the cumulative widths of all the batteries B supported on the base plate 10. The base plate 10 is of metallic material. The base plate 10 includes engagement elements for assembling the base plate 10 to the channel plate 20 to configure base plate - channel plate assembly to hold the base plate 10 and the channel plate 20 together before the brazing. The holes 10c formed on the base plate 10 to secure gap between stacked components for improved gripping and alignment before assembly. The holes can also be used for prepositioning and securely mounting the base plate - channel plate assembly to a casing 50 that in turn is secured to a vehicle frame. As the heat exchange between the coolant flowing through the fluid flow passages and the batteries B disposed over the base plate 10 is through the base plate 10, the base plate is generally of thinner section to achieve enhanced heat transfer between the fluid flowing through the fluid flow passages and the batteries B. The battery cooler 100 of the present invention utilizes a dedicated re-enforcement component in the form of flanged collar 32, 34 corresponding to the inlet and outlet nozzle 42, 44 for forming a pre-brazing assembly and reinforced connection by brazing between the base plate 10 and the nozzles 42 and 44. Generally, a thermal pad is disposed between the base plate 10 and the corresponding battery in order to enhance thermal contact between the battery B and the base plate to achieve efficient heat transfer between the battery and the coolant flowing through the fluid flow passages between the base plate 10 and the channel plate 20.

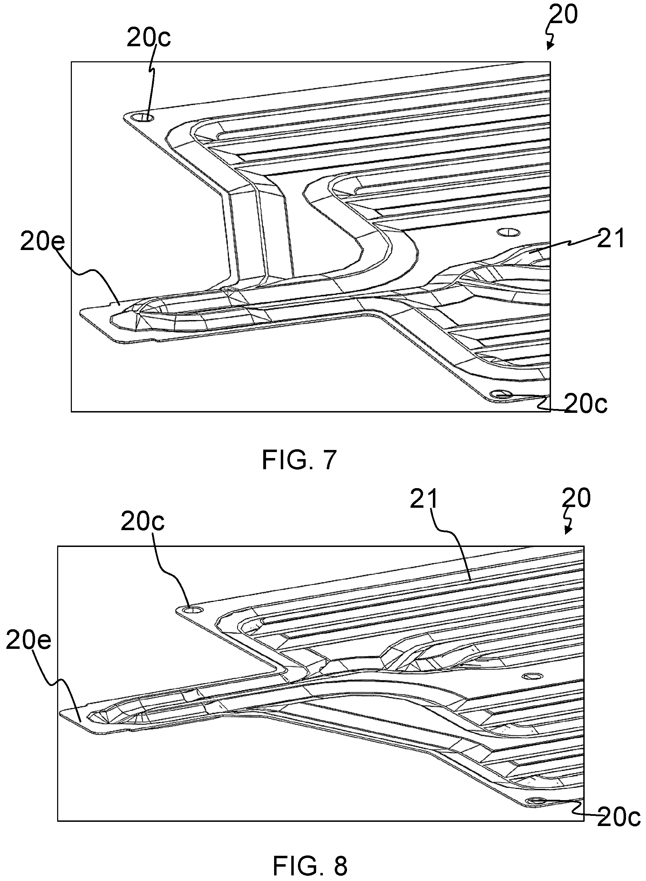

Referring to the FIG. 7 an FIG. 8 of the accompanying drawings, an enlarged view of the channel plate 20 from opposite sides is illustrated. The channel plate 20 is disposed abutting the base plate 10. At least one of the base plate 10 and the channel plate 20, is formed with channels 11 and 21 respectively. Preferably, the channel plate 20 is formed with channels 21. The channels 11, 21 define closed fluid flow passages between the base plate 10 and the channel plate 20 for coolant flow there-through when the base plate 10 and the channel plate 20 are assembled to each other. In accordance with a preferred embodiment of the present invention, the channels 21 are formed wholly on the channel plate 20. The fluid flowing through the fluid flow passages is generally a coolant for extracting heat from a heated body, for example, the batteries B in this case that are disposed over the base plate 10. Preferably, the channel plate 20 is of same dimension and shape, as the base plate 10 and is disposed in an overlapping manner with respect to the base plate 10. Preferably, the channel plate 20 includes a plurality of interconnected channels 21 extending along the longitudinal side of the channel plate 20. Particularly, the channels 21 formed on the channel plate 20 are interconnected channels 21 with numerous torturous turns to increase the length of the fluid flow passage and time taken by the fluid to traverse through the channels 21 to improve the heat exchange. However, the present invention is not limited to any particular configuration of the channels 21, placement of the channels, particularly, whether the channels are partially formed on the base plate and partially formed on the channel plate or wholly formed on the channel plate as far as the channels configure fluid flow passage for the flow of the coolant there through. The channel plate 20 is of metallic material. The channel plate 20 further includes mounting holes 20c formed thereon. The base plate 10 and the channel plate 20 being of similar shape and size, the holes 20c formed on the channel plate 20 are aligned to the holes 10c formed on the base plate 10 for passage of bolts there through. The bolted connection so formed can be used for mounting the base plate - channel plate assembly over the casing 50 that at least partially encapsulates the base plate -channel plate assembly and is mounted over a vehicle frame.

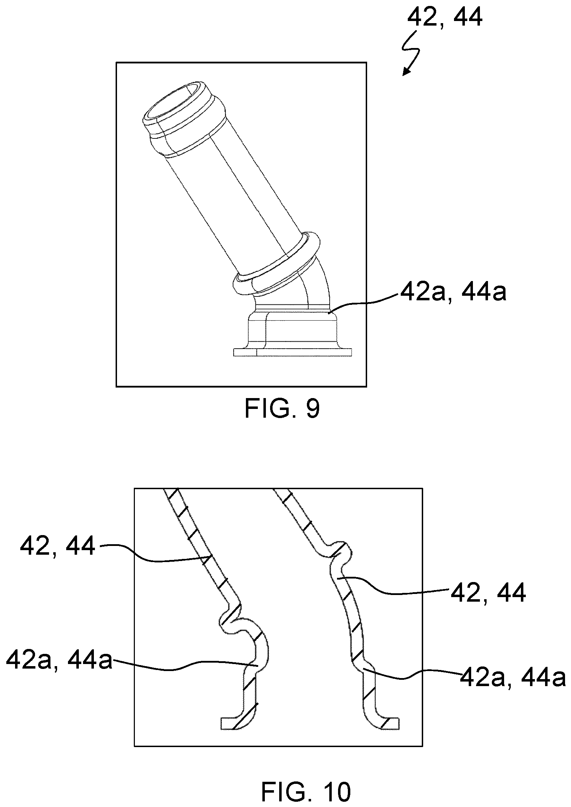

The inlet nozzle 42 and the outlet nozzle 44 corresponding to the first and second openings 10a and 10b formed on the base plate 10 are for ingress and egress of fluid, particularly, the coolant with respect to the fluid flow passages. FIG. 9 and FIG 10 illustrates different view of one of the nozzles 42 and 44. Particularly, FIG. 10 illustrates a sectional view of one of the nozzles 42 and 44. The inlet and outlet nozzles 42 and 44 are securely connected to the base plate 10 by brazing. More specifically, the inlet and outlet nozzles 42 and 44 are so connected to the base plate 10 that the inlet and outlet nozzles 42 and 44 are in fluid communication with the fluid flow passages defined by the channels 21. More specifically, the coolant ingresses the fluid-flow passages through the inlet 42, passes through the fluid-flow passages to extract heat generated in the batteries "B" resting on the base plate 10 and egresses the fluid flow passages through the outlet nozzle 44 after extracting heat from the batteries B. The inlet nozzle 42 and the outlet nozzle 44 are sufficiently spaced from each other to ensure the coolant entering the fluid flow passages from the inlet nozzle 42 do not escape from the outlet nozzle 44 without extracting heat from the batteries B. The inlet and outlet nozzles 42 and 44 are brazed during the brazing between other parts of the battery cooler 100 joined by brazing in the brazing furnace.

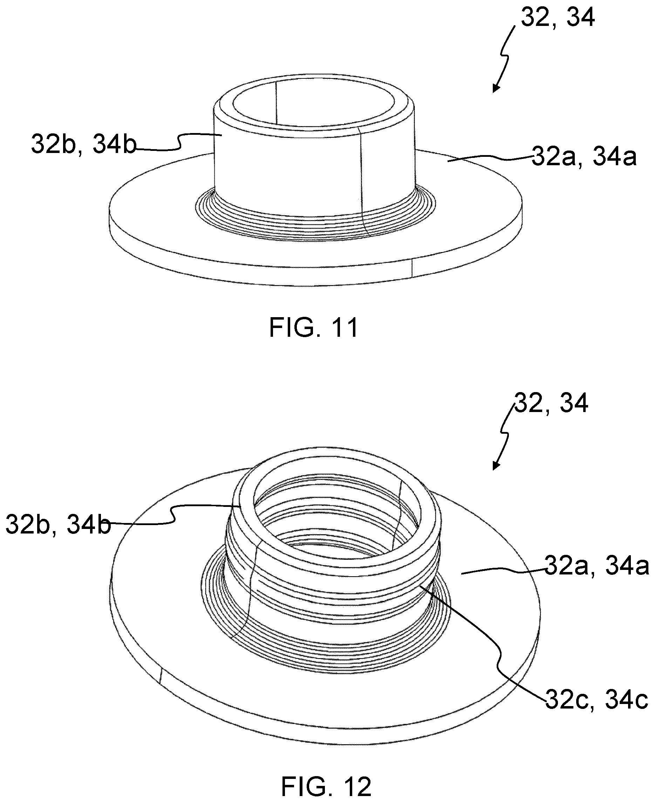

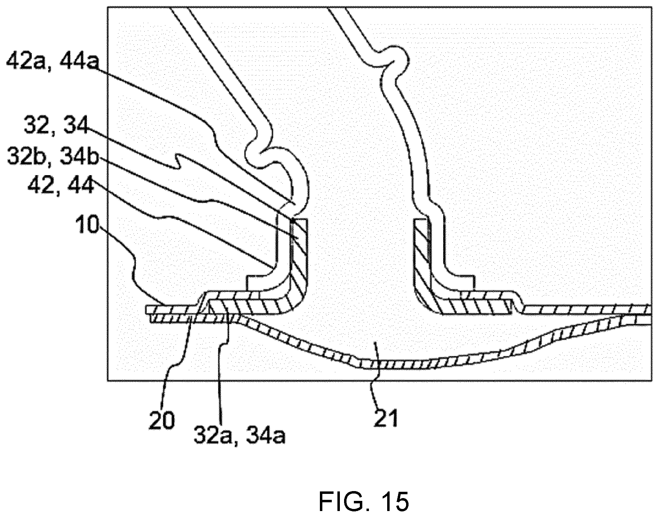

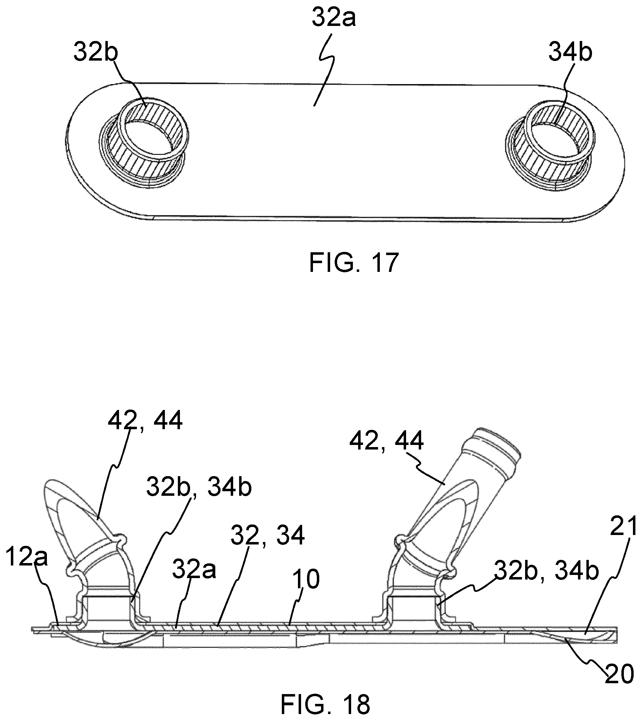

The battery cooler 100 includes at least one flanged collar 32, 34 separate from the base plate 10. In accordance with a preferred embodiment of the present invention, there are two separate flanged collars 32 and 34 for the two nozzles 42 and 44, each corresponding to the different nozzles 42 and 44 as illustrated in FIG. 15. In accordance with another embodiment of the present invention, there is one flanged collar for two nozzles 42 and 44 as illustrated in FIG. 18. FIG. 11 illustrates an isometric view of one of the flanged collar 32, 34 in accordance with an embodiment of the present invention. FIG. 12 - 14 illustrates different embodiments of the flanged collar 32, 34 that will be explained in detail in forthcoming section of the description. Each of the flanged collar 32, 34 includes a flange portion 32a, 34a and a corresponding sleeve portion 32b, 34b. The flanged collar 32, 34 forms a pre-brazing assembly between the corresponding nozzle 42, 44 and the base plate 10 and further forms brazing connection between the corresponding nozzle 42, 44 and the base plate 10. Generally, the flanged collar 32, 34 is having thickness more than the base plate 10, and preferentially more than the base plate 10 and the nozzle 42, 44. The flange portion 32a, 34a is supported on an inner side of the base plate 10 facing the channel plate 20. The sleeve portion 32b, 34b extends from the flange portion 32a, 34a, passes through the respective opening 10a, 10b and forms connection with the corresponding nozzle 42, 44. The sleeve portion 32b, 34b can extend either orthogonally from the flange portion 32a, 34a or at an angle, thereby permitting orthogonal connection or angular connection of the nozzle 42, 44 with the base plate 10. More specifically, the sleeve portion 32b, 34b is received and held inside the corresponding nozzle 42, 44. Alternatively, the nozzle 42, 44 is received in the corresponding sleeve portion 32b, 34b. Either one of sleeve portion 32b, 34b and the corresponding nozzle 42, 44 includes means for positioning the sleeve portion 32b, 34b with respect to the corresponding nozzle 42, 44. For example, referring to the FIG. 10 and 15 an inner side of the nozzle 42, 44 is formed with inwardly protruding stopper 42a, 44a to prevent further advance of the sleeve portion 32b, 34b of the flanged collar 32, 34 inside the corresponding nozzle 42, 44. In another embodiment, the nozzle 42, 44 is received and securely held inside the sleeve portion 32b, 34b, instead of the sleeve portion 32b, 34b being received in the corresponding nozzle 42, 44. However, the present invention is not limited to any particular configuration, particularly, whether the sleeve portion of the flanged collar is received inside the nozzle or whether the nozzle is received in the collar as far as there is interference fit between the two to prevent separation of the nozzle from the corresponding sleeve portion during the brazing.

Referring to the FIG. 15, an enlarged sectional view of a connection system for forming connection between the nozzle 42, 44 and the base plate 10 of the battery cooler 100 is illustrated. Particularly, at least one of the abutting faces of the base plate 10 and the channel plate 20 is formed with at least one recess 12, 22 to receive and hold at least a portion of the flange portion 32a, 34a therein. Particularly, at least a portion of the flange portion 32a, 34a received in the received in the corresponding recess 12, 22 is sandwiched between the base plate 10 and the channel plate 20. Preferably, the base plate 10 is formed with at least one recess 12a, 12b along at least a portion of the periphery of the corresponding opening 10a, 10b. Particularly, the at least one recess 12a, 12b is formed on the inner side of the base plate opposite the channel plate 20. The recess 12a, 12b receives and holds at least a portion of the flange portion 32a, 34a of the corresponding flanged collar 32, 34 therein sandwiched between the base plate 10 and the channel plate 20. In accordance with another embodiment of the present invention, the channel plate 20 is formed with at least one recess 22a, 22b that receives and holds at least a portion of the flange portion 32a, 34a of the corresponding flanged collar 32, 34 therein, sandwiched between the base plate 10 and the channel plate 20.

In accordance with a preferred embodiment of the present invention, the base plate include two recesses 12a and 12b each recess corresponding to the respective nozzle 42 and 44. Particularly, the battery cooler 100 is configured with connection system having separate flanged collars 32 and 34 for the inlet and outlet nozzles 42 and 44 respectively. The separate flanged collars 32 and 34 are formed with respective separate flange portions 32a and 34a and separate sleeve portions 32b and 34b extending from the respective flange portions 32a and 34a. The separate flange portions 32a and 34a are received in separate recesses 12a and 12b formed on the base plate 10, whereas the separate sleeve portions 32b and 34b are received in the corresponding inlet and outlet nozzles 42 and 44.

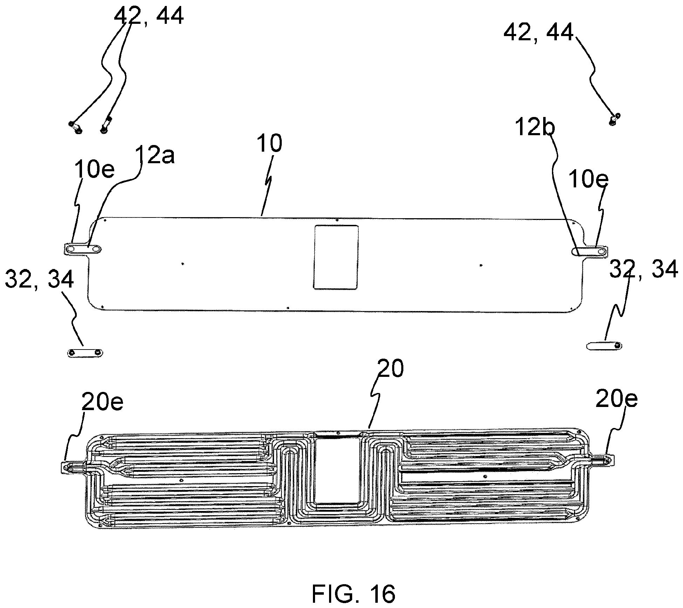

In accordance with another embodiment, the battery cooler 100 is configured with connection system having a single flanged collar 32, 34 with a single flange portion 32a and separate sleeve portions 32b and 34b extending from the single flange portion 32a as illustrated in FIG. 16 and 17. The single flange portion 32a is received in a single recess 12a formed on base plate 10 whereas the separate sleeve portions 32b and 34b are received in the corresponding inlet and outlet nozzles 42 and 44. In some cases, the nozzle 42, 44 is required to be connected to an extension portion 10e of the base plate 10 that is extending from the main portion thereof to address packaging issues. The channel plate 20 also includes an extension portion 20e corresponding to the extension portion 10e of the base plate 10. As the base plate 10 is of thinner section and the extension portion 10e being narrow, the extension portion 10e on which the collar nozzle 42, 44 is to be connected by brazing is fragile, thereby requiring reinforcement. Referring to the FIG. 16 and FIG. 17, the single flanged collar 32, 34 with single flange portion 32a and multiple sleeve portions 32b, 34b is illustrated. FIG. 18 illustrates a sectional view of a connection formed between the base plate 10 and the nozzles 42 and 44 by the single flanged collar 32 having single flange 32a and two sleeve portion 32b and 34b. The single flange portion 32a acts as a reinforcement for the extension portion 10e of the base plate 10 that is extending from the main portion of the base plate 10. Also, the single flanged collar 32, 34 with single flange portion 32a and multiple sleeve portions 32b, 34b can be either be connected to inlet and outlet nozzles 42 and 44 respectively or can be connected to two inlet nozzles 42 or two outlet nozzles 44.

For forming brazing connection between the flange portion 32a, 34a and the base plate 10, coating of cladding material is applied at the abutting surfaces of the components to be joined by brazing. The cladding material fuses during the brazing to form a secure connection between components being joined by brazing. At least one of inner sides of the base plate 10 and channel plate 20 and inner and outer sides of the corresponding flange portion 32a, 34a sandwiched between the base plate 10 and the channel plate 20 is coated with cladding material. The cladding material fuses during brazing in brazing furnace to form brazing connection between the flange portion 32a, 34a and the inner sides of the base plate 10 and the channel plate 20. More specifically, at least one of inner side of the recess 12, 22 and inner and outer sides of the corresponding flange portion 32a, 34a abutting the inner side of the recess 12, 22 and / or channel plate 20 is coated with cladding material to form brazing connection between the flange portion 32a, 32b and the inner side of the recess 12, 22 and / or channel plate 20. Similarly, at least one of inner side of the nozzle 42, 44 and outer side of the sleeve portion 32b, 34b is coated with cladding material to form brazing connection between the sleeve portion 32b, 34b and the corresponding nozzle 42, 44.

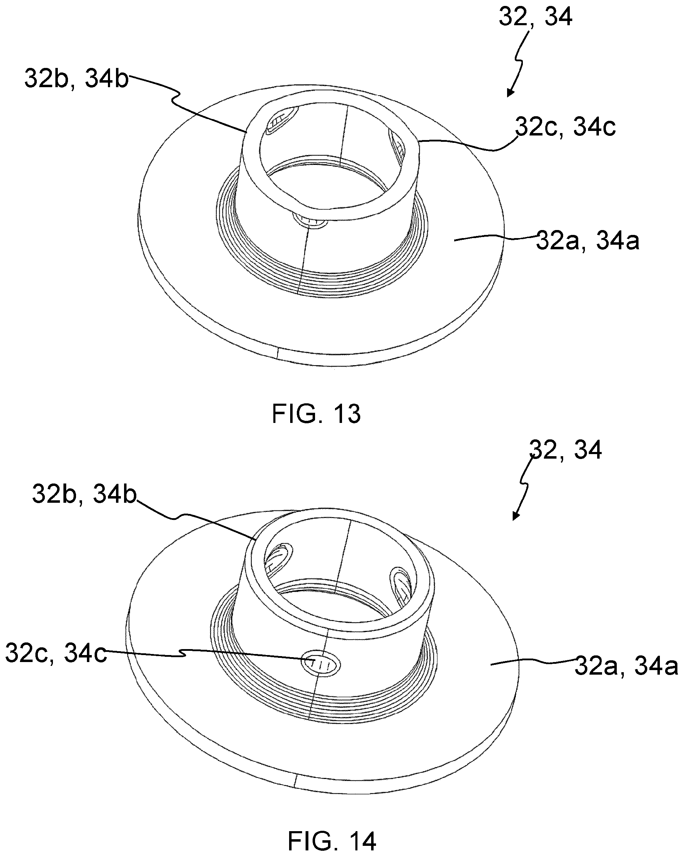

In order to form a pre-brazing assembly of the different components before subjecting to brazing, tight interference fit is required to be formed between the components to ensure that the components to be brazed do not fall apart during the brazing. For example, the sleeve portion 32b, 34b is having an external dimension at, at least a portion thereof more than the internal dimension of the corresponding nozzle 42, 44 to configure interference fit between sleeve portion 32b, 34b and the corresponding nozzle 42, 44. Further, the sleeve portion 32b, 34b can be formed diverging to form secure connection between the sleeve portion 32b, 34b and the corresponding nozzle 42, 44. Other arrangements may be used for retaining and securely holding the sleeve portion 32b, 34b inside the corresponding nozzle 42, 44. For example referring to the FIGS. 13 -15, retainer elements in the form of protrusions 32c, 34c secured to at least one of inner side of the nozzle 42, 44 and outer side of the sleeve portion 32b, 34b enable secure holding of the sleeve portion 32b, 34b inside the corresponding nozzle 42, 44. Preferably the retainer elements are protrusions in the form of ribs disposed along entire periphery of the sleeve portion 32b, 34b as illustrated in FIG. 12. Alternatively, the retainer elements are in the form of protruding elements formed on the sleeve portion 32b, 34b as illustrated in the FIG 13 and FIG. 14. The protruding elements can be either formed neat the free end of the sleeve portion 32b, 34b or away from the free end. Specifically, the present invention is not limited to any particular configuration of the retainer element, whether retainer element is in form of continuous or intermittent rib or is in the form of protruding element, also, the present invention is not limited to placement and spacing between the retainer elements in the form of protruding elements as far as the retainer elements securely hold the sleeve portion inside the corresponding nozzle. The retainer elements form the portion of the sleeve portion 32b, 34b having an external dimension more than the internal dimension of the corresponding nozzle. Particularly, an outer dimension of the protrusions 32c, 34c formed on the respective sleeve portions 32b, 34b is more than the internal dimension of the corresponding nozzle 42, 44.

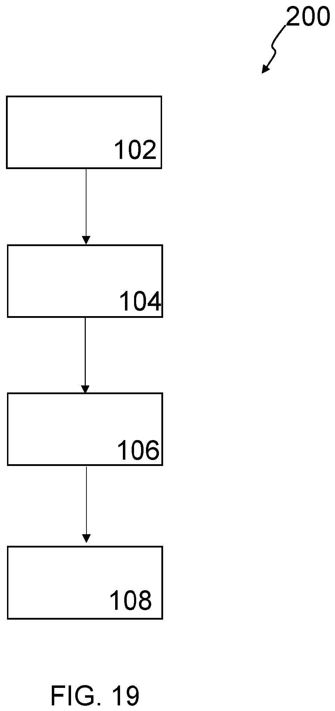

Also is disclosed a method 200 of assembling a battery cooler 100. FIG. 19 illustrates a block diagram depicting the various steps of the method 200 for forming a pre-brazing assembly between the components, for example, inlet and outlet nozzles 42 and 44 and a base plate 10 of the battery cooler 100 and forming brazing connection between such components. Particularly, the method 200 involves the step of assembling at least one separate flanged collar 32, 34 between the base plate 10 and the channel plate 20 forming a base plate - channel plate sub-assembly. Each of the flanged collar 32, 34 is having a flanged portion 32a, 34a and a sleeve portion 32b, 34b extending from the corresponding flange portion 32a, 34a. The method particularly involves sandwiching the flange portion 32a, 34a between the base plate 10 and the channel plate 20 to be securely held there-between and receiving the sleeve portion 32b, 34b within the corresponding nozzle 42, 44, thereby forming the pre-brazing assembly between the base plate 10 and the corresponding nozzles 42 and 44. The method also involves step of brazing the nozzles 42 and 44 to the base plate 10 via the corresponding flanged collars 32 and 34, wherein the flanged collars 32 and 34 being thicker than the base plate 10 acts as a reinforcement to form a secure connection between the nozzles 42 and 44 to the base plate 10.

Although, the various steps of the method 200 are depicted by blocks in the flow diagram and any number of steps described as method blocks can be combined in any order or can be performed in parallel to employ the method 200, or an alternative method. Additionally, individual blocks may be deleted from the flow chart depicting the method without departing from the scope and ambit of the present invention. The method 200 is to be understood with reference to the following description along with the Fig. 19.

The method includes the step 102 of assembling at least one flanged collar 32, 34 to the base plate 10 such that the sleeve portion 32b, 34b passes through the respective opening 10a, 10b of the base plate 10 and the flange portion 32a, 34a is received in corresponding recess 12a, 14a formed on an inner side of the base plate 10. Subsequently, the method 200 includes the step 104 of assembling the base plate 10 to the channel plate 20 such that at least a portion of the flange portion 32a, 32b received in the corresponding recess 12a, 12b is sandwiched and held between the base plate 10 and the channel plate 20. The method further includes the step 106 of assembling at least one nozzle 42, 44 to the corresponding sleeve portion 32b, 34b passing through and extending out of the opening 10a, 10b formed on the base plate 10 by receiving the sleeve portion 32b, 34b in the respective nozzle 42, 44. The sleeve portions 32b and 34b are received and securely held due to interference fit between the sleeve portions 32b and 34b and the respective nozzles 42 and 44, thereby defining a pre-brazing assembly of components to be joined by brazing in the brazing furnace. The method finally involves the step 108 of subjecting the pre-assembly so formed to brazing in a brazing furnace. Particularly, brazing connection is formed by fusing of cladding material disposed between the abutting surfaces of at least one flanged collar 32, 34 and at least one of base plate 10, the channel plate 20 and the corresponding nozzle 42, 44 to form brazing connection between the nozzle 42, 44 and the base plate 10.

## Claims

1. A battery cooler (100) comprising:
• a base plate (10) adapted to support thereon batteries B to be cooled on an outer side thereof, the base plate comprising openings (10a, 10b);
• a channel plate (20) disposed abutting the base plate (10),
at least one of the base (10) and the channel plate (20) formed with respective channels (11) and (21), preferentially, the channel plate (20) is formed with channels (21) to define closed fluid flow passages between the base plate (10) and the channel plate (20) for coolant flow;
wherein the battery cooler (100) further comprises at least one flanged collar (32, 34) separate from the base plate (10), the flanged collar (32, 34) comprising a flange portion (32a, 34a) and a sleeve portion (32b, 34b), the battery cooler being **characterized in that** the flanged collar (32, 34) forms secure connection between a corresponding nozzle (42, 44) and the base plate (10), and **in that** the sleeve portion (32b, 34b) is received and held inside the corresponding nozzle (42, 44).

2. The battery cooler (100) as claimed in the previous claim further comprises an inlet nozzle (42) and an outlet nozzle (44) corresponding to the first and second openings (10a) and (10b) respectively for ingress and egress of fluid with respect to the fluid flow passages, the inlet and outlet nozzles (42) and (44) being securely connected to the base plate (10) by a joining process .

3. The battery cooler (100) as claimed in any of the preceding claims, wherein the flanged collar (32, 34) is having thickness more than the base plate (10), preferentially more than the base plate (10) and the nozzle (42, 44).

4. The battery cooler (100) as claimed in any of preceding claims, wherein an inner side of the nozzle (42, 44) is formed with inwardly protruding stopper (42a, 44a) adapted to prevent further advance of the sleeve portion (32b, 34b) into the corresponding nozzle (42, 44).

5. The battery cooler (100) as claimed in any of preceding claims, wherein,
• the flange portion (32a, 34a) is adapted to held between the base plate (10) and the channel plate (20); and
• the sleeve portion (32b, 34b) extends from the flange portion (32a, 34a) passes through the respective opening (10a, 10b) and is adapted to form connection with corresponding nozzle (42, 44).

6. The battery cooler (100) as claimed in any of the preceding claims, wherein at least one of the abutting faces of the base plate (10) and the channel plate (20) is formed with at least one recess (12, 22) adapted to receive and hold at least a portion of the flange portion (32a, 34a) therein sandwiched between the base plate (10) and the channel plate (20).

7. The battery cooler (100) as claimed in previous claim, wherein the base plate (10) is formed with at least one recess (12a, 12b) along at least a portion of the periphery of the corresponding opening (10a,10b) and on the inner side thereof opposite the channel plate (20) , the recess (12a, 12b) is adapted to receive and hold at least a portion of the flange portion (32a, 34a) therein sandwiched between the base plate (10) and the channel plate (20).

8. The battery cooler (100) as claimed in the previous claim comprising separate flanged collars (32) and (34) for the inlet and outlet nozzles, the separate flanged collars (32) and (34) are formed with separate flange portions (32a) and (34a) and separate sleeve portions (32b) and (34b) extending from the respective flange portions (32a) and (34a), the separate flange portions (32a) and (34a) are adapted to be received in separate recesses (12a) and (12b) formed on the base plate (10), whereas the separate sleeve portions (32b) and (34b) are received in the corresponding inlet and outlet nozzles (42) and (44).

9. The battery cooler (100) as claimed in claim 6 comprising a single flanged collar (32, 34) with a single flange portion (32a) and separate sleeve portions (32b) and (34b) extending from the single flange portion (32a), wherein the single flange portion (32a) is adapted to be received in a single recess (12a) formed on the base plate (10), whereas the separate sleeve portions (32b) and (34b) are adapted to be received in the corresponding inlet and outlet nozzles (42) and (44).

10. The battery cooler (100) as claimed in any of the preceding claims, wherein the sleeve portion (32b, 34b) is having an external dimension at at least a portion thereof more than the internal dimension of the corresponding nozzle (42, 44) to configure interference fit between the sleeve portion (32b, 34b) and the corresponding nozzle (42, 44).

11. The battery cooler (100) as claimed in any of the preceding claims, wherein retainer elements in the form of protrusions (32c, 34c) are secured to at least one of the inner side of the nozzle (42, 44) and outer side of the sleeve portion (32b, 34b) to enable secure holding of the sleeve portion (32b, 34b) inside the corresponding nozzle (42, 44).

12. The battery cooler (100) as claimed in the previous claim, wherein the retainer elements form the portion of the sleeve portion (32b, 34b) having an external dimension more than the internal dimension of the corresponding nozzle (42, 44).

13. The battery cooler (100) as claimed in the claim 11, wherein outer dimension of the protrusions (32c, 34c) is more than the internal dimension of the corresponding nozzle (42, 44).

14. A method (200) of assembling a battery cooler according to claim 1 (100), the method comprising the steps of :
• assembling at least one flanged collar (32, 34) to a base plate (10) such that a sleeve portion (32b, 34b) passes through the respective opening (10a, 10b) formed on the base plate (10) and a flange portion (32a, 34a) is received in corresponding recess (12a, 12b) formed on an inner side of the base plate (10);
• assembling the base plate (10) to the channel plate (20) such that at least a portion of the flange portion (32a, 34a) received in the corresponding recess (12a, 12b) is sandwiched and held between the base plate (10) and the channel plate (20);
• assembling at least one nozzle (42, 44) to the corresponding sleeve portion (32b, 34b) passing through and extending out of the opening (10a, 10b) formed on the base plate (10),
thereby defining a pre-assembly to be securely connected by a joining process
• subjecting the pre-assembly so formed to the joining process, wherein irreversible connection is formed between abutting surfaces of at least one flanged collar (32, 34) and at least one of the base plate (10), the channel plate (20) and the corresponding nozzle (42, 44) to form irreversible connection between the nozzle (42, 44) and the base plate (10).

## Patentansprüche

1. Ein Batteriekühler (100), umfassend:
- eine Grundplatte (10), die dazu ausgelegt ist, darauf zu kühlende Batterien B auf einer Außenseite davon zu tragen, wobei die Grundplatte Öffnungen (10a, 10b) umfasst;
- eine Kanalplatte (20), die an der Grundplatte (10) anliegend angeordnet ist, wobei mindestens eine der Grundplatte (10) und der Kanalplatte (20) mit entsprechenden Kanälen (11) und (21) ausgebildet ist, vorzugsweise ist die Kanalplatte (20) mit Kanälen (21) ausgebildet, um geschlossene Fluidströmungsdurchgänge zwischen der Grundplatte (10) und der Kanalplatte (20) für den Kühlmittelfluss zu definieren;
wobei der Batteriekühler (100) weiterhin mindestens einen geflanschten Kragen (32, 34) umfasst, der von der Grundplatte (10) getrennt ist, wobei der geflanschte Kragen (32, 34) einen Flanschabschnitt (32a, 34a) und einen Hülsenabschnitt (32b, 34b) umfasst, wobei der Batteriekühler **dadurch gekennzeichnet ist, dass** der geflanschte Kragen (32, 34) eine sichere Verbindung zwischen einer entsprechenden Düse (42, 44) und der Grundplatte (10) bildet, und dadurch, dass der Hülsenabschnitt (32b, 34b) in der entsprechenden Düse (42, 44) aufgenommen und gehalten wird.

2. Der Batteriekühler (100) nach dem vorhergehenden Anspruch umfasst weiterhin eine Einlassdüse (42) und eine Auslassdüse (44), die der ersten und zweiten Öffnung (10a) bzw. (10b) entsprechen, für den Ein- und Austritt von Fluid in Bezug auf die Fluidströmungsdurchgänge, wobei die Einlass- und Auslassdüsen (42) und (44) durch einen Fügeprozess sicher mit der Grundplatte (10) verbunden sind.

3. Der Batteriekühler (100) nach einem der vorhergehenden Ansprüche, wobei der geflanschte Kragen (32, 34) eine Dicke aufweist, die größer ist als die der Grundplatte (10), vorzugsweise größer als die der Grundplatte (10) und der Düse (42, 44).

4. Der Batteriekühler (100) nach einem der vorhergehenden Ansprüche, wobei eine Innenseite der Düse (42, 44) mit nach innen vorstehendem Anschlag (42a, 44a) ausgebildet ist, der dazu ausgelegt ist, ein weiteres Vordringen des Hülsenabschnitts (32b, 34b) in die entsprechende Düse (42, 44) zu verhindern.

5. Der Batteriekühler (100) nach einem der vorhergehenden Ansprüche, wobei
- der Flanschabschnitt (32a, 34a) dazu ausgelegt ist, zwischen der Grundplatte (10) und der Kanalplatte (20) gehalten zu werden; und
- der Hülsenabschnitt (32b, 34b) sich vom Flanschabschnitt (32a, 34a) erstreckt, durch die jeweilige Öffnung (10a, 10b) hindurchgeht und dazu ausgelegt ist, eine Verbindung mit der entsprechenden Düse (42, 44) zu bilden.

6. Der Batteriekühler (100) nach einem der vorhergehenden Ansprüche, wobei mindestens eine der aneinander liegenden Flächen der Grundplatte (10) und der Kanalplatte (20) mit mindestens einer Aussparung (12, 22) ausgebildet ist, die dazu ausgelegt ist, mindestens einen Teil des Flanschabschnitts (32a, 34a) darin aufzunehmen und zu halten, der zwischen der Grundplatte (10) und der Kanalplatte (20) eingeschlossen ist.

7. Der Batteriekühler (100) nach dem vorhergehenden Anspruch, wobei die Grundplatte (10) mit mindestens einer Aussparung (12a, 12b) entlang mindestens eines Teils des Umfangs der entsprechenden Öffnung (10a, 10b) und auf der Innenseite davon gegenüber der Kanalplatte (20) ausgebildet ist, wobei die Aussparung (12a, 12b) dazu ausgelegt ist, mindestens einen Teil des Flanschabschnitts (32a, 34a) darin aufzunehmen und zu halten, der zwischen der Grundplatte (10) und der Kanalplatte (20) eingeschlossen ist.

8. Der Batteriekühler (100) nach dem vorhergehenden Anspruch, umfassend separate geflanschte Kragen (32) und (34) für die Einlass- und Auslassdüsen, wobei die separaten geflanschten Kragen (32) und (34) mit separaten Flanschabschnitten (32a) und (34a) und separaten Hülsenabschnitten (32b) und (34b) ausgebildet sind, die sich von den jeweiligen Flanschabschnitten (32a) und (34a) erstrecken, wobei die separaten Flanschabschnitte (32a) und (34a) dazu ausgelegt sind, in separaten Aussparungen (12a) und (12b) aufgenommen zu werden, die auf der Grundplatte (10) ausgebildet sind, während die separaten Hülsenabschnitte (32b) und (34b) in den entsprechenden Einlass- und Auslassdüsen (42) und (44) aufgenommen werden.

9. Der Batteriekühler (100) nach Anspruch 6, umfassend einen einzelnen geflanschten Kragen (32, 34) mit einem einzelnen Flanschabschnitt (32a) und separaten Hülsenabschnitten (32b) und (34b), die sich vom einzelnen Flanschabschnitt (32a) erstrecken, wobei der einzelne Flanschabschnitt (32a) dazu ausgelegt ist, in einer einzelnen Aussparung (12a) aufgenommen zu werden, die auf der Grundplatte (10) ausgebildet ist, während die separaten Hülsenabschnitte (32b) und (34b) dazu ausgelegt sind, in den entsprechenden Einlass- und Auslassdüsen (42) und (44) aufgenommen zu werden.

10. Der Batteriekühler (100) nach einem der vorhergehenden Ansprüche, wobei der Hülsenabschnitt (32b, 34b) an mindestens einem Teil davon eine äußere Abmessung aufweist, die größer ist als die innere Abmessung der entsprechenden Düse (42, 44), um eine Presspassung zwischen dem Hülsenabschnitt (32b, 34b) und der entsprechenden Düse (42, 44) zu konfigurieren.

11. Der Batteriekühler (100) nach einem der vorhergehenden Ansprüche, wobei Halteelementen in Form von Vorsprüngen (32c, 34c) an mindestens einer der Innenseite der Düse (42, 44) und der Außenseite des Hülsenabschnitts (32b, 34b) befestigt sind, um ein sicheres Halten des Hülsenabschnitts (32b, 34b) innerhalb der entsprechenden Düse (42, 44) zu ermöglichen.

12. Der Batteriekühler (100) nach dem vorhergehenden Anspruch, wobei die Halteelemente den Teil des Hülsenabschnitts (32b, 34b) bilden, der eine äußere Abmessung aufweist, die größer ist als die innere Abmessung der entsprechenden Düse (42, 44).

13. Der Batteriekühler (100) nach Anspruch 11, wobei die äußere Abmessung der Vorsprünge (32c, 34c) größer ist als die innere Abmessung der entsprechenden Düse (42, 44).

14. Ein Verfahren (200) zum Zusammenbau eines Batteriekühlers nach Anspruch 1 (100), wobei das Verfahren die folgenden Schritte umfasst:
- Montieren mindestens eines geflanschten Kragens (32, 34) an einer Grundplatte (10), sodass ein Hülsenabschnitt (32b, 34b) durch die jeweilige Öffnung (10a, 10b) hindurchgeht, die auf der Grundplatte (10) ausgebildet ist, und ein Flanschabschnitt (32a, 34a) in einer entsprechenden Aussparung (12a, 12b) aufgenommen wird, die auf einer Innenseite der Grundplatte (10) ausgebildet ist;
- Montieren der Grundplatte (10) an der Kanalplatte (20), sodass mindestens ein Teil des Flanschabschnitts (32a, 34a), der in der entsprechenden Aussparung (12a, 12b) aufgenommen ist, zwischen der Grundplatte (10) und der Kanalplatte (20) eingeschlossen und gehalten wird;
- Montieren mindestens einer Düse (42, 44) an dem entsprechenden Hülsenabschnitt (32b, 34b), der durch die auf der Grundplatte (10) ausgebildete Öffnung (10a, 10b) hindurchgeht und sich aus dieser heraus erstreckt, wodurch eine Vormontage definiert wird, die durch einen Fügeprozess sicher verbunden werden soll;
- Unterziehen der so gebildeten Vormontage dem Fügeprozess, wobei eine irreversible Verbindung zwischen anliegenden Oberflächen von mindestens einem geflanschten Kragen (32, 34) und mindestens einem der Grundplatte (10), der Kanalplatte (20) und der entsprechenden Düse (42, 44) gebildet wird, um eine irreversible Verbindung zwischen der Düse (42, 44) und der Grundplatte (10) zu bilden.

## Revendications

1. Refroidisseur de batterie (100) comprenant :
- une plaque de base (10) adaptée pour supporter des batteries B à refroidir sur son côté extérieur, la plaque de base comprenant des ouvertures (10a, 10b) ;
- une plaque à canaux (20) disposée en butée contre la plaque de base (10), au moins l'une de la base (10) et de la plaque à canaux (20) étant formée avec des canaux respectifs (11) et (21), de préférence, la plaque à canaux (20) est formée avec des canaux (21) pour définir des passages d'écoulement de fluide fermés entre la plaque de base (10) et la plaque à canaux (20) pour l'écoulement du liquide de refroidissement ;
dans lequel le refroidisseur de batterie (100) comprend en outre au moins un collier à bride (32, 34) séparé de la plaque de base (10), le collier à bride (32, 34) comprenant une partie de bride (32a, 34a) et une partie manchon (32b, 34b), le refroidisseur de batterie étant **caractérisé en ce que** le collier à bride (32, 34) forme une connexion sécurisée entre une buse correspondante (42, 44) et la plaque de base (10), et **en ce que** la partie manchon (32b, 34b) est reçue et maintenue à l'intérieur de la buse correspondante (42, 44).

2. Refroidisseur de batterie (100) selon la revendication précédente comprend en outre une buse d'entrée (42) et une buse de sortie (44) correspondant respectivement aux première et deuxième ouvertures (10a) et (10b) pour l'entrée et la sortie de fluide par rapport aux passages d'écoulement de fluide, les buses d'entrée et de sortie (42) et (44) étant solidement connectées à la plaque de base (10) par un procédé d'assemblage.

3. Refroidisseur de batterie (100) selon l'une quelconque des revendications précédentes, dans lequel le collier à bride (32, 34) a une épaisseur supérieure à celle de la plaque de base (10), de préférence supérieure à celle de la plaque de base (10) et de la buse (42, 44).

4. Refroidisseur de batterie (100) selon l'une quelconque des revendications précédentes, dans lequel un côté intérieur de la buse (42, 44) est formé avec une butée saillante vers l'intérieur (42a, 44a) adaptée pour empêcher l'avancement supplémentaire de la partie manchon (32b, 34b) dans la buse correspondante (42, 44).

5. Refroidisseur de batterie (100) selon l'une quelconque des revendications précédentes, dans lequel,
- la partie de bride (32a, 34a) est adaptée pour être maintenue entre la plaque de base (10) et la plaque à canaux (20) ; et
- la partie manchon (32b, 34b) s'étend depuis la partie de bride (32a, 34a), passe à travers l'ouverture respective (10a, 10b) et est adaptée pour former une connexion avec la buse correspondante (42, 44).

6. Refroidisseur de batterie (100) selon l'une quelconque des revendications précédentes, dans lequel au moins l'une des faces en butée de la plaque de base (10) et de la plaque à canaux (20) est formée avec au moins un évidement (12, 22) adapté pour recevoir et maintenir au moins une partie de la partie de bride (32a, 34a) prise en sandwich entre la plaque de base (10) et la plaque à canaux (20).

7. Refroidisseur de batterie (100) selon la revendication précédente, dans lequel la plaque de base (10) est formée avec au moins un évidement (12a, 12b) le long d'au moins une partie de la périphérie de l'ouverture correspondante (10a, 10b) et sur le côté intérieur de celle-ci opposé à la plaque à canaux (20), l'évidement (12a, 12b) est adapté pour recevoir et maintenir au moins une partie de la partie de bride (32a, 34a) prise en sandwich entre la plaque de base (10) et la plaque à canaux (20).

8. Refroidisseur de batterie (100) selon la revendication précédente comprenant des colliers à bride séparés (32) et (34) pour les buses d'entrée et de sortie, les colliers à bride séparés (32) et (34) sont formés avec des parties de bride séparées (32a) et (34a) et des parties manchon séparées (32b) et (34b) s'étendant depuis les parties de bride respectives (32a) et (34a), les parties de bride séparées (32a) et (34a) sont adaptées pour être reçues dans des évidements séparés (12a) et (12b) formés sur la plaque de base (10), tandis que les parties manchon séparées (32b) et (34b) sont reçues dans les buses d'entrée et de sortie correspondantes (42) et (44).

9. Refroidisseur de batterie (100) selon la revendication 6 comprenant un collier à bride unique (32, 34) avec une partie de bride unique (32a) et des parties manchon séparées (32b) et (34b) s'étendant depuis la partie de bride unique (32a), dans lequel la partie de bride unique (32a) est adaptée pour être reçue dans un évidement unique (12a) formé sur la plaque de base (10), tandis que les parties manchon séparées (32b) et (34b) sont adaptées pour être reçues dans les buses d'entrée et de sortie correspondantes (42) et (44).

10. Refroidisseur de batterie (100) selon l'une quelconque des revendications précédentes, dans lequel la partie manchon (32b, 34b) a une dimension externe sur au moins une partie de celle-ci supérieure à la dimension interne de la buse correspondante (42, 44) pour configurer un ajustement par interférence entre la partie manchon (32b, 34b) et la buse correspondante (42, 44).

11. Refroidisseur de batterie (100) selon l'une quelconque des revendications précédentes, dans lequel des éléments de retenue sous forme de protubérances (32c, 34c) sont fixés à au moins l'un du côté intérieur de la buse (42, 44) et du côté extérieur de la partie manchon (32b, 34b) pour permettre un maintien sécurisé de la partie manchon (32b, 34b) à l'intérieur de la buse correspondante (42, 44).

12. Refroidisseur de batterie (100) selon la revendication précédente, dans lequel les éléments de retenue forment la partie de la partie manchon (32b, 34b) ayant une dimension externe supérieure à la dimension interne de la buse correspondante (42, 44).

13. Refroidisseur de batterie (100) selon la revendication 11, dans lequel la dimension externe des protubérances (32c, 34c) est supérieure à la dimension interne de la buse correspondante (42, 44).

14. Procédé (200) d'assemblage d'un refroidisseur de batterie selon la revendication 1 (100), le procédé comprenant les étapes de :
- assembler au moins un collier à bride (32, 34) à une plaque de base (10) de sorte qu'une partie manchon (32b, 34b) passe à travers l'ouverture respective (10a, 10b) formée sur la plaque de base (10) et qu'une partie de bride (32a, 34a) soit reçue dans l'évidement correspondant (12a, 12b) formé sur un côté intérieur de la plaque de base (10) ;
- assembler la plaque de base (10) à la plaque à canaux (20) de sorte qu'au moins une partie de la partie de bride (32a, 34a) reçue dans l'évidement correspondant (12a, 12b) soit prise en sandwich et maintenue entre la plaque de base (10) et la plaque à canaux (20) ;
- assembler au moins une buse (42, 44) à la partie manchon correspondante (32b, 34b) passant à travers et s'étendant hors de l'ouverture (10a, 10b) formée sur la plaque de base (10), définissant ainsi un pré-assemblage à connecter solidement par un procédé d'assemblage
- soumettre le pré-assemblage ainsi formé au procédé d'assemblage, dans lequel une connexion irréversible est formée entre les surfaces en butée d'au moins un collier à bride (32, 34) et au moins l'un de la plaque de base (10), de la plaque à canaux (20) et de la buse correspondante (42, 44) pour former une connexion irréversible entre la buse (42, 44) et la plaque de base (10).
